# EUROPÄISCHE PATENTSCHRIFT

(11) **EP 2 329 127 B1**
(45) Veröffentlichungstag und Bekanntmachung des Hinweises auf die Patenterteilung: **05.09.2012**
(21) Anmeldenummer: 09736105.9
(22) Anmeldetag: 18.08.2009
(51) Int. Cl.: F02G 5/02, F02G 1/043

(54) **ABGASANLAGE FÜR KRAFTFAHRZEUGE MIT INTEGRIERTER WÄRMEKRAFTMASCHINE**
EXHAUST SYSTEM FOR MOTOR VEHICLES COMPRISING A BUILT-IN HEAT ENGINE
SYSTÈME D'ÉCHAPPEMENT POUR VÉHICULES AUTOMOBILES COMPRENANT UN MOTEUR THERMIQUE INTÉGRÉ

(30) Priorität: 30.09.2008 DE 102008050655
(43) Veröffentlichungstag der Anmeldung: 08.06.2011
(73) Patentinhaber: INSTITUT FÜR LUFT- UND KÄLTETECHNIK GEMEINNÜTZIGE GESELLSCHAFT mbH, 01309 Dresden (DE); Fox-service GmbH, 08349 Johanngeorgenstadt (DE)
(72) Erfinder: KAISER, Gunter, 01237 Dresden (DE); KLIER, Jürgen, 01309 Dresden (DE); OTT, Siegfried, 08349 Johanngeorgenstadt (DE)
(74) Vertreter: Kaufmann, Sigfrid
(86) Internationale Anmeldenummer: PCT/DE2009/001172
(87) Internationale Veröffentlichungsnummer: WO 2010/037358

(56) Entgegenhaltungen:
- WO-A1-90/11447
- DE-A1- 19 701 160
- JP-A- 2005 306 280

## Beschreibung

Die Erfindung betrifft eine Abgasanlage, in die eine schnell laufende Wärmekraftmaschine mit äußerer Beheizung integriert ist, wobei sich die bewegten Teile der Wärmekraftmaschine ausschließlich auf der Seite des niedrigeren Temperaturniveaus befinden. Die Lebensdauer der Wärmekraftmaschine ist dadurch mindestens so hoch, wie die übliche Lebensdauer von Kraftfahrzeugen.

Aus dem Stand der Technik sind bereits mehrere Lösungen zur Nutzung der Energie von Abgasen, die beim Betrieb von Kraftfahrzeugen entstehen, bekannt.

So wird in DE 40 20 854 A1 eine Verbrennungskraftmaschine mit einer Turbine, die über das Abgas der Verbrennungskraftmaschine angetrieben wird, beschrieben. Die von der Turbine erzeugte Energie wird mittels eines Getriebes und einer Flüssigkeitskupplung auf die Kurbelwelle der Verbrennungskraftmaschine übertragen, d. h., als zusätzliche Antriebsenergie zugeführt.

In DE 197 01 160 A1 wird ein Verfahren zur Energiegewinnung aus dem Abgas eines Verbrennungsmotors offenbart, bei dem das aus dem Verbrennungsraum des Motors geleitete Abgas über einen im Abgasführungssystem eingebundenen Erhitzerkopf eines Heißgasmotors (Stirling-Motor) geführt wird. Die thermische Energie wird vom Heißgasmotor in mechanische Energie (Drehbewegung) umgewandelt, die wahlweise dem Fahrzeugantrieb zugeführt oder mittels eines Generators in elektrische Energie umgewandelt wird.

Auch in JP 2005306280 A wird vorgeschlagen, einen Stirling-Motor in das Abgassystem eines Fahrzeugs zu integrieren, wobei auf eine spezielle Anordnung des Stirling-Motors sowie seines Verdampfers und Verflüssigers abgezielt wird.

Aus DE 100 01 460 A1 ist ein Pulsrohr-Leistungsverstärker bekannt, der aus einer kontinuierlich arbeitenden, mechanischen Kompressionseinrichtung, einer baulichen Einheit aus Regenerator, Gaserhitzer, Pulsrohr und Gaskühler sowie einer Basisrealisierung aus vier Ventilen, die in den Rohrleitungen zwischen den Baugruppen sitzen. Der Pulsrohr Leistungsverstärker ist als Antriebseinrichtung auch für andere Kreisprozesse vorgesehen.

Sowohl die mit Abgas betriebene Turbine als auch der Stirling-Motor sind jedoch vergleichsweise komplex aufgebaut. Ein wesentlicher Nachteil der vorstehenden Lösungen bei der Nutzung der Wärme von Kraftfahrzeugabgasen besteht auch darin, dass sie mindestens zwei bewegte Teile besitzen, zwischen denen eine Kraftübertragung erfolgt. Eines der beweglichen Teile (Kolben oder Regenerator) ist Temperaturen ausgesetzt, die nahezu der Temperatur des Abgasstromes (ungefähr 1000°C) entsprechen, während sich das andere bewegliche Teil auf der kalten Seite des Stirling-Motors befindet.

Die Kraftübertragung zwischen den beiden beweglichen Teilen ist problematisch, da einerseits große Kräfte auf die relativ weit voneinander entfernten Teile übertragen werden müssen, wozu Übertragungselemente (z.B. Kolbenstangen) mit großem Durchmesser erforderlich sind, andererseits jedoch, um die Verlustwärmeströme gering zu hatten, der Wärmestrom zwischen beiden Teilen möglichst klein gehalten werden muss.

Auf der Seite mit der hohen Temperatur bereitet auch die Abdichtung und Schmierung Schwierigkeiten. Oft werden deshalb dort größere Toleranzen/Spalte zugelassen, die allerdings erhöhte Todvolumen, Shuttle- und Abströmverluste verursachen. Andererseits sind passgenaue Abdichtungen für hohe Temperaturen, wie z. B. mittels Flüssigmetallen (Blei) oder Feststoffschmierungen (z.B. Bornitrid), nur aufwendig und mit teuren Materialien herzustellen.

Die bewegten Teile auf der Seite mit der hohen Temperatur unterliegen außerdem einem sehr hohen Verschleiß, wodurch die Standzeiten und Lebensdauern von Stirling-Motoren stark verkürzt werden.

Der Erfindung liegt die Aufgabe zugrunde, die Nachteile des Standes der Technik zu beseitigen. Insbesondere soll ein Abgassystem mit einer integrierten Wärmekraftmaschine mit äußerer Beheizung geschaffen werden, deren bewegte Teile sich ausschließlich auf der Seite mit dem niedrigeren Temperaturniveau befinden. Die verwendete Wärmekraftmaschine soll kompakt und schnell laufend ausgeführt sein. Zudem sollen mit ihr hohe Lebensdauern erreichbar sein.

Diese Aufgabe wird erfindungsgemäß durch die kennzeichnenden Merkmale des Anspruchs 1 gelöst. Weitere vorteilhafte Ausführungen und Verwendungen ergeben sich aus den Ansprüchen 2 bis 9.

Nach Maßgabe der Erfindung ist in die Abgasanlage für Kraftfahrzeuge eine Wärmekraftmaschine mit äußerer Beheizung nach dem Pulsröhrenprinzip integriert, die aus mindestens einem Expander, der einen Zylinder und einen Kolben oder eine Membran umfasst, und mindestens einem fluidisch an den Expander angekoppelten thermischen Kopf besteht, der sich aus einer Serienschaltung eines Kühlers, einer Pulsröhre, eines Heizers und eines Regenerators zusammensetzt. Zur Integration der Wärmekraftmaschine in die Abgasanlage wird der Heizer entweder direkt in den Abgasstrom eingebracht oder mittels eines Wärmetauschers thermisch an diesen angekoppelt.

Der Regenerator ist fest mit der Pulsröhre verbunden, wodurch die Wärmekraftmaschine, im Gegensatz zu Stirling-Motoren und auch allen anderen gegenwärtig eingesetzten Wärmekraftmaschinen, ohne bewegliche Teile auf der heißen Seite ausgeführt werden kann. Das einzige bewegliche Teil der Wärmekraftmaschine, nämlich der Kolben bzw. die Membran des Expanders, befindet sich im kalten Bereich. Der Betrieb der Maschine wird durch Erzeugung eines Arbeitsintegrals mittels einer Temperaturwelle ermöglicht. Die Wärmekraftmaschine ist schnell laufend und arbeitet nach dem Druckkammerprinzip (analog wie Stirling-Motoren), also nicht thermoakustisch.

Der Funktionsprozess der Wärmekraftmaschine besteht aus den beiden Arbeitstakten Kompression und Expansion. Bei der Kompression wird das Arbeitsfluid (typischerweise Arbeitsgas) mittels des Kolbens/der Membran aus dem Expander hinaus und über den Kühler, die Pulsröhre und den Heizer in den Regenerator geschoben. Bei der Expansion erfolgt der umgekehrte Vorgang.

Mit der erfindungsgemäßen Wärmekraftmaschine werden die eingangs beschriebenen Probleme, die bei der Führung, Abdichtung und Schmierung auftreten, vermieden. Außerdem treten weder der sonst übliche starke mechanische Verschleiß der bewegten Teile bei hohen Temperaturen noch die Wirkungsgradeinbußen durch Verlustwärmeströme, die von den mechanischen Kopplungselementen verursacht werden, auf. Mit der Wärmekraftmaschine können deshalb im Vergleich zu herkömmlichen Maschinen, wie z.B. Stirling-Motoren, wesentlich höhere Lebensdauern erreicht werden. Außerdem ist es möglich, die Wärmekraftmaschine sehr kompakt aufzubauen.

Der Kolben bzw. die Membran kann zudem mit vergleichsweise geringer Masse hergestellt werden; somit können ohne großen technischen Aufwand schnell laufende Wärmekraftmaschinen hergestellt werden.

Zur Erhöhung des Wirkungsgrades der Wärmekraftmaschine ist vorgesehen, dass der Regenerator des mindestens einen thermischen Kopfes nicht, wie sonst üblich, auf einem konstanten Temperaturniveau gehalten wird, sondern im Regenerator ein Temperaturgradient eingestellt wird. Hierzu ist an der dem Heizer abgewandten Seite des Regenerators ein Kühler angebracht, wodurch ein Temperaturabbau längs des Regenerators bewirkt wird. Die Temperatur des Regenerators nimmt folglich mit zunehmender Entfernung vom Heizer stetig ab. Ein in Richtung des Regenerators längs des Erhitzers abfallendes Temperaturprofil ist nachweislich vorteilhaft für den Wirkungsgrad der eingesetzten Wärmekraftmaschine, da hier der Abgasstrom kontinuierlich ausgekühlt wird.

Das Füllmaterial des Regenerators besteht aus Filz, Siebgewebe oder offenporigem Metallschaum. In Abhängigkeit vom Arbeitsfluid und der Arbeitstemperatur wird Edelstahl, Kupfer oder Aluminium verwendet.

In einer bevorzugten Ausführung wird der Kolben (oder die Membran) des Expanders freischwingend im Zylinder gelagert und jeder der beiden durch den Kolben/die Membran gebildeten Arbeitsräume fluidisch an jeweils die Kühlerseite eines separaten thermischen Kopfs angekoppelt. Somit ist bei der Verwendung nur eines Expanders die Arbeitsleistung pro Zyklus verdoppelt. Je nach Aufbau des Expanders kann die Maschine entweder als resonante oder als nicht resonante Wärmekraftmaschine ausgeführt werden.

Die beiden thermischen Köpfe sind identisch aufgebaut und werden im Gegentakt betrieben, d. h., wenn in einem thermischen Kopf die Kompression erfolgt, erfolgt im anderen die Expansion.

Eine weitere Leistungssteigerung wird mit einer Ausführungsform erreicht, bei der jeweils an der dem Heizer abgewandten Seite der Regeneratoren der beiden thermischen Köpfe ein Kühler, der vom Arbeitsfluid durchströmt werden kann, angebracht ist und beide Kühler mittels einer Drossel fluidisch verbunden sind. Da die beiden thermischen Köpfe im Gegentakt betrieben werden, wird erreicht, dass jeweils das Volumen des einen thermischen Kopfes, dem anderen thermischen Kopf als Gasbalast zur Verfügung steht.

Zur Erhöhung der Leistung unter Erhaltung der Schnellläufigkeit können mehrere solcher aus einem Expander mit zwei thermischen Köpfen aufgebaute Wärmekraftmaschinen in Form eines Mehrzylindersystems kaskadiert werden. Denkbar sind auch Systeme, bei denen zur Steigerung der Leistung mehrere thermische Köpfe an einen Expander oder mehrere Expander an einen thermischen Kopf fluidisch angekoppelt werden.

In einer bevorzugten Variante wird die in das Abgassystem integrierte Wärmekraftmaschine zum Antrieb eines elektrischen Lineargenerators verwendet. Als Generatoren können Systeme mit bewegtem Magneten, mit bewegter Spule, mit bewegter Spule und Magnetkern, piezoelektrische oder sonstige Generatoren eingesetzt werden. Simulationsrechnungen haben gezeigt, dass durch ein solches Modul aus Wärmekraftmaschine und Generator die bislang in Fahrzeugen verwendeten Lichtmaschinen ohne weiteres ersetzt werden können.

Möglich ist auch der Einsatz der Wärmekraftmaschine als Antrieb für einen rotatorischen elektrischen Generator, in dem z. B. ein Pleuel oder die Öse einer Kurbelschleife mittig am Kolben befestigt wird. Allerdings treten bedingt durch Kippmomente höhere Kräfte zwischen Kolben und Zylinderwand auf, sodass es erforderlich ist, die Wärmekraftmaschine mit höheren Mitteldrücken zu betreiben. Höhere Mitteldrücke sind zwar prinzipiell vorteilhaft, da bei höheren Mitteldrücken größere Arbeitsintegrale (höhere Leistungen) erreicht werden, bei zu hohen Mitteldrücken besteht jedoch die Gefahr, dass Komponenten der Wärmekraftmaschine Schaden nehmen.

Die Erfindung wird nachfolgend anhand von drei Ausführungsbeispielen näher erläutert; hierzu zeigen:
- Fig. 1:: In der Abgasanlage verwendete Wärmekraftmaschine mit Regeneratoren auf konstantem Temperaturniveau;
- Fig. 2:: In der Abgasanlage verwendete Wärmekraftmaschine mit Temperaturabbau längs der Regeneratoren;
- Fig. 3:: In der Abgasanlage verwendete Wärmekraftmaschine mit Temperaturabbau längs der Regeneratoren und fluidischer Verbindung der kalten Enden der Regeneratoren.

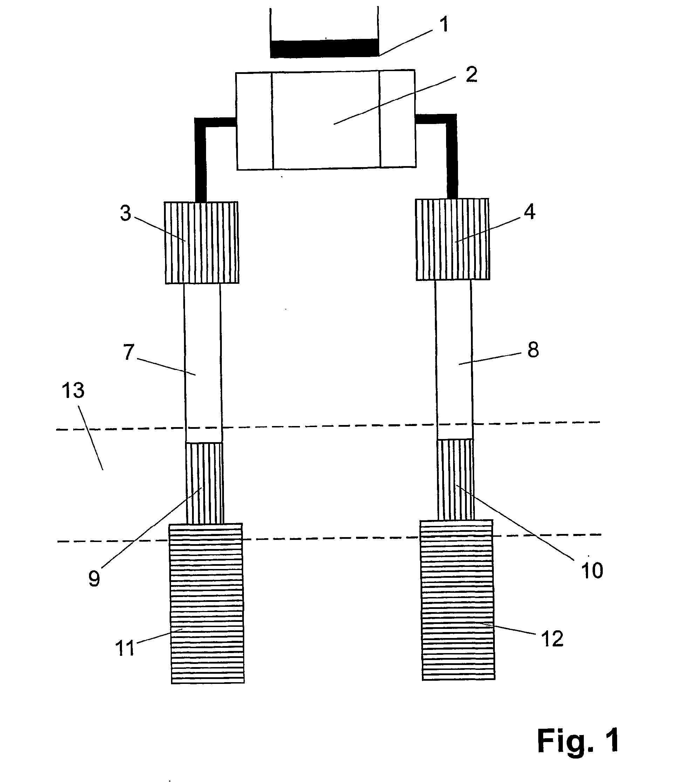

Wie aus Fig. 1 ersichtlich, besteht die in der Abgasanlage verwendete Wärmekraftmaschine mit Regeneratoren 11, 12 auf konstantem Temperaturniveau aus einem Expander 2, der einen freischwingend gelagerten Zylinder und einen Kolben umfasst, und zwei thermischen Köpfen, die sich jeweils aus der fluidischen Serienschaltung der Kühler 3, 4, der Pulsröhren 7, 8, der Heizer 9, 10 und der Regeneratoren 11,12 zusammensetzen. Die beiden identisch aufgebauten thermischen Köpfe sind mit den Seiten, auf denen sich die Kühler 3, 4 befinden, jeweils fluidisch an einen der beiden durch den Kolben und den Zylinder des Expanders 2 gebildeten Arbeitsräume angekoppelt.

Der Kolben des Expanders 2 trägt das Magnetsystem des elektrodynamischen Lineargenerators 1; die Induktionsspule und der magnetische Rückschluss befinden sich im Stator des Generators 1.

Die Kühler 3, 4 haben ungefähr die Umgebungstemperatur, während sich die Heizer 9, 10 ungefähr auf dem Temperaturniveau des genutzten Wärmestroms befinden. Abhängig von der Wärmequelle (Blockheizkraftwerk, zentrales Kraftwerk, Industrieanlage oder Kraftfahrzeug) beträgt der Temperaturwert des Heizers typischerweise 600 bis 2000°C. Mit Modifikationen sind mit der Wärmekraftmaschine jedoch schon Temperaturen ab 150°C nutzbar. Die Regeneratoren 11, 12 sind jeweils thermisch an die Heizer 9, 10 gekoppelt und werden mittels einer Kühlvorrichtung auf eine konstante Temperatur eingestellt, die unterhalb der Heizertemperatur, jedoch oberhalb der Kühlertemperatur liegt.

Während der Kompression wird das Arbeitsfluid (Arbeitsgas) in einem der Arbeitsräume des Expanders verdichtet und jeweils über den Kühler 3, 4, die Pulsröhre 7, 8 und den Heizer 9, 10 in den Regenerator 11, 12 des fluidisch an den Arbeitsraum angekoppelten thermischen Kopfs geschoben. Das Arbeitsgas hat beim Übertritt aus der Pulsröhre 7 bzw. 8 in den Heizer 9 bzw. 10 eine Temperatur, die in der überwiegenden Zeit des Kompressionsvorgangs oberhalb der Heizertemperatur liegt, sodass über die Wand des Heizers 9 bzw. 10 nur wenig Wärme an das Arbeitsgas abgegeben wird. Im Regenerator 11 bzw. 12 wird die Übertemperatur des Arbeitsgases an dessen Füllmaterial, das aus offenporigem Schaum aus Edelstahl besteht, abgegeben. Die Kompression verläuft polytrop (im allgemeinen sub-isotherm), infolgedessen baut sich bei der Kompression nur ein geringer Druck auf.

Zu Beginn der Expansion nimmt das Arbeitsgas zunächst Wärme vom Regenerator 11 bzw. 12 auf. Beim Zurückströmen des Arbeitsgases vom Regenerator 11 bzw. 12 in den Heizer 9 bzw. 10 liegt die Temperatur des Arbeitsgases unter der des Heizers 9 bzw. 10. Im Heizer 9 bzw. 10 nimmt das Arbeitsgas Wärme von den Wänden des Heizers 9 bzw. 10 auf und dehnt sich dabei aus. Aufgrund der Ausdehnung des Arbeitsgases steigt, obwohl gleichzeitig der Kolben des Expanders 2 zurückläuft und damit das Gesamtvolumen des Systems vergrößert wird, zunächst der Druck des Arbeitsgases. Sobald das Arbeitsgas weitgehend erwärmt ist, dehnt es sich langsamer aus und der Druck fällt.

Aufgrund der Asymmetrie der Eintrittsbedingungen des Arbeitsgases in den Heizer bzgl. der Kompression und der Expansion wird eine Asymmetrie des Arbeitsintegrals bzgl. der beiden Arbeitstakte bewirkt, d.h. von der Wärmekraftmaschine wird unter Wärmeaufnahme aus dem Heizer 9 bzw. 10 Nettoarbeit geleistet.

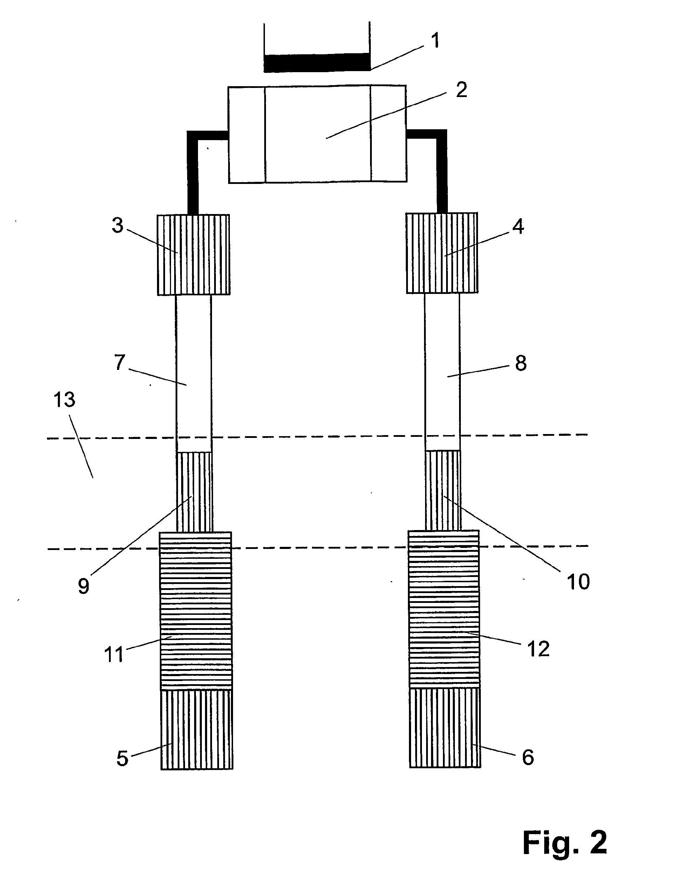

Beim Betrieb der Wärmekraftmaschine mit Regeneratoren 11, 12 auf konstantem Temperaturniveau treten, bedingt durch den sprunghaften Übergang von der hohen Temperatur der Heizer 9, 10 auf die niedrigere Temperatur der Regeneratoren 11, 12, vergleichsweise hohe Verlustwärmeströme auf. Die Verlustwärmeströme und damit der Wirkungsgrad der Wärmekraftmaschine können verringert werden, indem in den Regeneratoren 11, 12 ein Temperaturgradient eingestellt wird. Hierzu wird bei der für das Abgassystem verwendeten Wärmekraftmaschine jeweils an der dem Heizer 9, 10 abgewandten Seite der Regeneratoren 11,12 der beiden thermischen Köpfe ein Regenerator-Kühler 5, 6 angebracht (Fig. 2), der einen Temperaturabbau längs der Regeneratoren 11, 12 bewirkt, d. h., die Temperatur in den Regeneratoren 11, 12 nimmt mit zunehmender Entfernung vom Heizer ab. Die Kühler 5, 6 sind so ausgeführt, dass sie vom Arbeitsgas durchströmt werden können, jedoch abgeschlossene Räume bilden. Sie wirken somit als Pufferräume, die zur Verbesserung des Wärmeübergangs an den kalten Enden der Regeneratoren 11, 12 durch Vermeidung der Stagnation des Arbeitsgases beitragen.

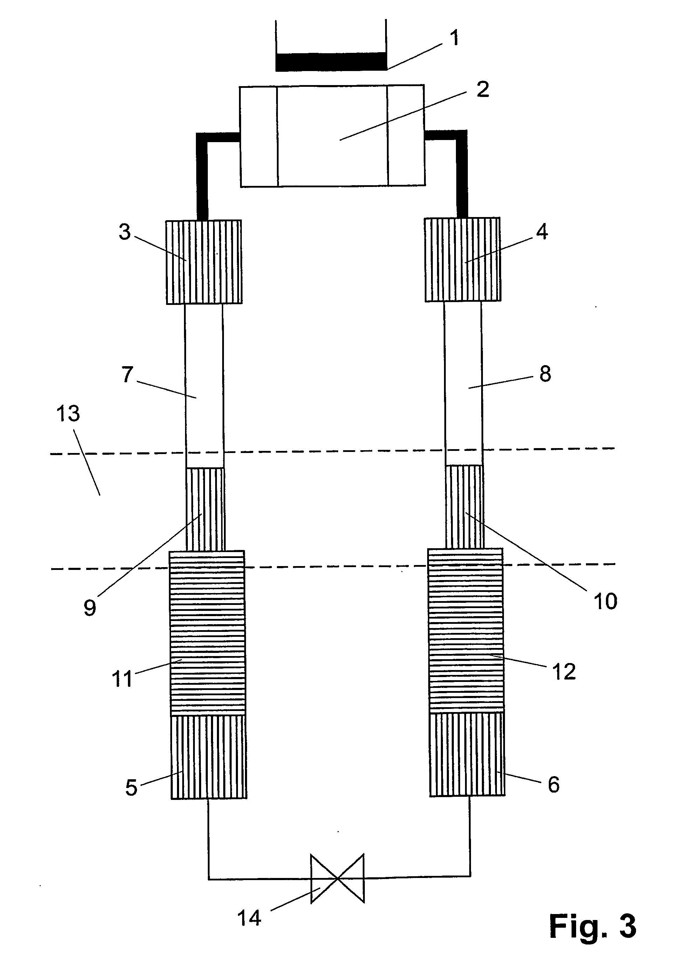

Eine weitere Verbesserung des Wirkungsgrades der in der Abgasanlage verwendeten Wärmekraftmaschine kann erreicht werden, wenn die Enden der Regenerator-Kühler 5, 6 mittels einer Drosselleitung 14 verbunden sind (Fig. 3). Da die beiden thermischen Köpfe im Gegentakt betrieben werden, wird so erreicht, dass jeweils das Volumen des einen thermischen Kopfs dem des anderen als Gasballast zur Verfügung steht.

### Liste der verwendeten Bezugszeichen

- 1: Generator
- 2: Expander
- 3: Kühler des ersten thermischen Kopfs
- 4: Kühler des zweiten thermischen Kopfs
- 5: Regenerator-Kühler des ersten thermischen Kopfs
- 6: Regenerator-Kühler des zweiten thermischen Kopfs
- 7: Pulsröhre des ersten thermischen Kopfs
- 8: Pulsröhre des zweiten thermischen Kopfs
- 9: Heizer des ersten thermischen Kopfs
- 10: Heizer des zweiten thermischen Kopfs
- 11: Regenerator des ersten thermischen Kopfs
- 12: Regenerator des zweiten thermischen Kopfs
- 13: Abgaskanal
- 14: Drosselleitung

## Patentansprüche

1. Abgasanlage für Kraftfahrzeuge mit integrierter Wärmekraftmaschine, die der Rückgewinnung von Energie aus der Wärme der Abgase dient, **dadurch gekennzeichnet, dass** eine Wärmekraftmaschine nach dem Pulsröhrenprinzip mit mindestens einem Expander (2), der einen Zylinder und einen Kolben oder eine Membran umfasst, sowie mindestens einem fluidisch an den Expander (2) angekoppelten thermischen Kopf, der aus der fluidischen Serienschaltung eines Kühlers (3 bzw. 4), einer Pulsröhre (7 bzw. 8), eines Heizers (9 bzw. 10) und eines Regenerators (11 bzw. 12) besteht, verwendet ist, wobei der Regenerator (11 bzw. 12) des mindestens einen thermischen Kopfes fest mit der Pulsröhre (7 bzw. 8) verbunden ist.

2. Abgasanlage nach Anspruch 1, **dadurch gekennzeichnet, dass** bei der Wärmekraftmaschine an der dem Heizer (9 bzw. 10) abgewandten Seite des Regenerators (11 bzw. 12) ein Regenerator-Kühler (5 bzw. 6) angebracht ist, der der Einstellung eines Temperaturgradienten im Regenerator (11 bzw. 12) dient.

3. Abgasanlage nach Anspruch 1 und 2, **dadurch gekennzeichnet, dass** der Regenerator (11 bzw. 12) der Wärmekraftmaschine offenporigen Metallschaum einschließt.

4. Abgasanlage nach Anspruch 1 bis 3, **dadurch gekennzeichnet, dass** der Kolben oder die Membran des Expanders (2) der Wärmekraftmaschine freischwingend im Zylinder gelagert ist, wobei jeder der beiden durch Kolben oder Membran und Zylinder gebildeten Arbeitsräume fluidisch an einen separaten thermischen Kopf gekoppelt ist.

5. Abgasanlage nach Anspruch 4, **dadurch gekennzeichnet, dass** die beiden thermischen Köpfe der Wärmekraftmaschine identisch aufgebaut sind.

6. Abgasanlage nach Anspruch 5, **dadurch gekennzeichnet, dass** bei der Wärmekraftmaschine jeweils an der dem Heizer (9, 10) abgewandten Seite der Regeneratoren (11, 12) der beiden thermischen Köpfe ein vom Fluid durchströmbarer Regenerator-Kühler (5, 6) fluidisch und thermisch angekoppelt ist und beide Regenerator-Kühler (5, 6) mittels einer Drosselleitung (14) fluidisch verbunden sind.

7. Abgasanlage nach Patentanspruch 4 bis 6, **dadurch gekennzeichnet, dass** die Wärmekraftmaschine mehrere Expander mit jeweils zwei fluidisch angekoppelten thermischen Kopfmodulen umfasst, wobei die Kolben oder Membranen der Expander in Form eines Mehrzylindersystems mechanisch gekoppelt sind.

8. Abgasanlage nach Patentanspruch 1 bis 7, **dadurch gekennzeichnet, dass** die Wärmekraftmaschine der Antrieb eines elektrischen Lineargenerators ist.

9. Abgasanlage nach Patentanspruch 1 bis 8, **dadurch gekennzeichnet, dass** die Wärmekraftmaschine in Verbindung mit einem elektrischen Generator als Lichtmaschine verwendet wird.

## Claims

1. An exhaust gas system for motor vehicles with integrated heat engine, said system being used to recover energy from the heat of the exhaust gases, **characterized in that** a heat engine according to the pulse tube principle with at least one expander (2), which comprises a cylinder and a piston or a diaphragm, and with at least one thermal head coupled fluidically to the expander (2), said head consisting of the fluidic connection in series of a cooler (3 and 4), a pulse tube (7 and 8), a heater (9 and 10) and a regenerator (11 and 12), is used, wherein the regenerator (11 and 12) of the at least one thermal head is connected rigidly to the pulse tube (7 and 8).

2. The exhaust gas system as claimed in claim 1, **characterized in that**, in the heat engine, a regenerator-cooler (5 and 6) is attached on the side of the regenerator (11 and 12) remote from the heater (9 and 10) and is used to set a temperature gradient in the regenerator (11 and 12).

3. The exhaust gas system as claimed in claims 1 and 2, **characterized in that** the regenerator (11 and 12) of the heat engine encloses open-pored metal foam.

4. The exhaust gas system as claimed in claims 1 to 3, **characterized in that** the piston or the diaphragm of the expander (2) of the heat engine is mounted in the cylinder in a freely oscillating manner, wherein each of the two working chambers formed by the piston or diaphragm and cylinder is coupled fluidically to a separate thermal head.

5. The exhaust gas system as claimed in claim 4, **characterized in that** the two thermal heads of the heat engine are constructed identically.

6. The exhaust gas system as claimed in claim 5, **characterized in that**, in the heat engine, a regenerator-cooler (5, 6) through which fluid can flow is coupled fluidically and thermally to the side of each of the regenerators (11, 12) of the two thermal heads remote from the heater (9, 10), and both regenerator-coolers (5, 6) are connected fluidically by means of a throttle line (14).

7. The exhaust gas system as claimed in claims 4 to 6, **characterized in that** the heat engine comprises a plurality of expanders, each with two fluidically coupled thermal head modules, wherein the pistons or diaphragms of the expanders are coupled mechanically in the form of a multi-cylinder system.

8. The exhaust gas system as claimed in claims 1 to 7, **characterized in that** the heat engine is the drive of an electric linear generator.

9. The exhaust gas system as claimed in claims 1 to 8, **characterized in that** the heat engine is used in conjunction with an electric generator as an alternator.

## Revendications

1. Système d'échappement pour véhicules automobiles avec moteur thermique intégré servant à la récupération de l'énergie thermique des gaz d'échappement, **caractérisé en ce qu'**un moteur thermique est utilisé, qui fonctionne selon le principe du tube à pulsion et qui comporte au moins un expanseur (2) qui comprend un vérin et un piston ou une membrane, ainsi qu'au moins une tête thermique connectée fluidiquement à l'expanseur (2) et composée d'un circuit fluidique en série d'un radiateur (3 ou 4), d'un tube à pulsion (7 ou 8), d'un chauffage (9 ou 10) et d'un régénérateur (11 ou 12), le régénérateur (11 ou 12) de ladite au moins une tête thermique étant relié à demeure avec le tube à pulsion (7 ou 8).

2. Système d'échappement selon la revendication 1, **caractérisé en ce que** le moteur thermique comprend, sur le côté du régénérateur (11 ou 12) opposé au chauffage (9 ou 10), un radiateur de régénérateur (5 ou 6) servant à régler un gradient de température dans le régénérateur (11 ou 12).

3. Système d'échappement selon l'une des revendications 1 et 2, **caractérisé en ce que** le régénérateur (11 ou 12) du moteur thermique inclut une mousse métallique à pores ouverts.

4. Système d'échappement selon l'une des revendications 1 à 3, **caractérisé en ce que** le piston ou la membrane de l'expanseur (2) du moteur thermique est monté de manière à osciller librement dans le vérin, chacun des deux espaces de travail formés par le piston ou la membrane avec le cylindre étant connecté fluidiquement avec une tête thermique distincte.

5. Système d'échappement selon la revendication 4, **caractérisé en ce que** les deux têtes thermiques du moteur thermique sont de construction identique.

6. Système d'échappement selon la revendication 5, **caractérisé en ce que** le moteur thermique comprend, sur le côté de chacun des régénérateurs (11 ou 12) des deux têtes thermiques qui est opposé au chauffage (9 ou 10), un radiateur de régénérateur (5 ou 6) qui peut être parcouru par le fluide et qui est connecté fluidiquement et thermiquement et **en ce que** les deux radiateurs de régénérateur (5 ou 6) sont connectés fluidiquement par une conduite avec vanne d'étranglement (14).

7. Système d'échappement selon l'une des revendications 4 à 6, **caractérisé en ce que** le moteur thermique comprend plusieurs expanseurs possédant chacun deux modules de tête thermique connectés fluidiquement, les pistons ou membranes des expanseurs étant connectés mécaniquement sous la forme d'un système à plusieurs vérins.

8. Système d'échappement selon l'une des revendications 1 à 7, **caractérisé en ce que** le moteur thermique est le mécanisme d'entraînement d'un générateur électrique linéaire.

9. Système d'échappement selon l'une des revendications 1 à 8, **caractérisé en ce que** le moteur thermique est utilisé comme moteur d'éclairage en liaison avec un générateur électrique.
